Europäisches Patentamt

(19) European Patent Office

Office européen des brevets

(11) Publication number: **0 206 693**
**A2**

## (12) EUROPEAN PATENT APPLICATION

(21) Application number: 86304572.0

(22) Date of filing: 13.06.86

(51) Int. Cl.⁴: **B29D 30/32**

(30) Priority: 24.06.85 US 747773

(43) Date of publication of application:
**30.12.86 Bulletin 86/52**

(84) Designated Contracting States:
**AT BE DE FR GB IT LU NL SE**

(71) Applicant: **NRM CORPORATION**
**400 W. Railroad Street**
**Columbiana Ohio 44408(US)**

(72) Inventor: **Enders, George E.**
**15100 Salem-Alliance Road**
**Salem Ohio 44460(US)**

(74) Representative: **Rooney, Paul Blaise et al**
**D.Young & Co. 10 Staple Inn**
**London WC1V 7RD(GB)**

(54) **Tire building machine and method.**

(57) A tire building machine and method utilizes an annular rotatable expandable drum or deck (12). Associated with each deck edge is a bladder assembly (17, 18) which, when inflated, causes the portion of the tire material overlapping the deck edge (15, 16) to fold back upon itself at such edge to form a folded edge, as in a belt folding machine, or to wrap around a bead, as in a tire building machine. When not inflated the bladders lie flat and extend axially of the deck edges and radially slightly interiorly of the deck surface. In order to facilitate the winding of the material onto the drum from a suitable servicer, either automatically or manually, the deck is provided with lateral rigid extension (30, 31) which overlie the bladder assemblies when not inflated and which are designed to underlie the leading and/or trailing edge of the tire material. The lateral extensions may be provided with vacuum or magnetic grippers (142), the latter employed with steel belt material, either of which may be activated or deactivated or continuously operative. In this manner, the lateral extensions permit the machine to operate in a substantially automatic mode both as to winding and splicing. Because of the bias angle at which the material may be cut, the lateral extensions may be positioned substantially circumferentially offset from each other. Because the lateral extension would normally interfere with the action of the bladder asemblies when inflated, such lateral extensions are mounted for retraction and/or elevation to clear the path of the bladder assemblies when inflated.

Fig. 1

## "Tire Building Machine And Method"

DISCLOSURE

This invention relates generally as indicated to a tire building machine and method and more particularly to such machine which includes rigid lateral deck or drum extensions to enable automatic winding or splicing of the tire material on the drum without affecting the normal operation of the machine.

In one preferred form this invention relates to certain improvements in a Tire Belt Folding Maching such as described and claimed in U.S. Patent No. 4,427,473, issued January 24, 1984.

BACKGROUND OF THE INVENTION

In a tire building process, tires or tire components such as belts or breakers are formed on drums by winding and in such process the edges of the material overhang the edges of the drum to be subsequently folded or wrapped. The overhang or unsupported edge portions of the material make automatic feeding, winding or splicing difficult.

The tire belt folding machine of such prior Patent No. 4,427,473 utilizes a unique expansible drum or deck which is adjustable in width but which presents a well defined deck edge, each edge being associated with a bladder assembly which is operative, when inflated, to fold a tire belt or breaker material overhanging the deck edge back upon itself or intermediate plies at such deck edge to form a folded tire breaker or belt.

The bladder assemblies, when not inflated, lie flat extending axially from beneath the drum or deck edges. Such inwardly offset bladder assemblies in their deflated condition do not present a rigid or firm surface upon which the lateral edges of the tire material may be positioned. For proper underlying support or for proper gripping of the tire material as it is wound in the drum or deck, a rigid sub-surface underlying the leading and/or trailing edge of the building stock is desired, both for correct manual or automatic feeding of the stock from a servicer and the like and for butt or lap splicing at the material joint.

In addition, because of the close tolerances required for removal of the formed belt from the machine and the clearances available when the bladder assemblies are deflated, the position of the lateral extensions must be within certain very close tolerances. For example, such extensions cannot extend radially beyond the outer circumference of the drum or deck, and should abut or be in close proximity to the deck edge to provide the desired supporting surface. Since the deck edge is adjustable both axially and radially, the lateral extension must be also.

SUMMARY OF THE INVENTION

The present invention relates to certain improvements in existing tire building machines such as shown in Cantarutti U.S. Patent No. 3,438,832 or belt or breaker folding machines, as in the preferred illustrated embodiment, such as shown in U.S. Patent No. 4,427,473. Such improvements comprise readily positionable rigid underlying supports which may be positioned at the drum or deck edge to constitute rigid lateral extensions thereof. This provides a rigid undersurface for the entire transverse width of the tire material including the lateral edges of such material which normally overhang the drum. Such lateral supports may be positioned at a variety of positions circumferentially of the drum or deck and may be provided with grippers either continuously or intermittently operated to facilitate the automatic feeding or winding of the tire material. The improvements of the present invention also provide the necessary support for the overhanging tire components not only for such feeding or winding, but also for either automatic or manual splicing.

The supports are readily adaptable to existing expanding drums and are mounted on the drum segments so that the supports not only expand but also rotate with the drum. Such supports are adaptable to an individual drum sector and to more than one sector and one or more may be situated on either side of the drum centerline circumferentially offset from each other to accommodate tire material cut on a bias angle. The supports are mechanically and fluid power operated and may readily be adjusted laterally if the drum or deck width changes. The supports are retractable to provide clearance for bladder folding or turn-up. As a gripping element either vacuum or magnetics may be used on the lateral extensions for the use of supporting ferrous or non-ferrous materials, such as steel wire, arimid or fiberglass etc. With the improvements of the present invention, the versatility of the machine to function in a completely automatic mode is greatly enhanced and also to provide greater precision in the construction of tires or tire components.

To the accomplishment of the foregoing and related ends the invention, then, comprises the features hereinafter fully described and particularly pointed out in the claims, the following description and the annexed drawings setting forth in detail certain illustrative embodiments of the invention, these being indicative, however, of but a few of the various ways in which the principles of the invention may be employed.

BRIEF DESCRIPTION OF THE DRAWINGS

In the annexed drawings:

Fig. 1 is a schematic developed plan view of a drum or deck surface of a tire belt folding machine utilizing the improvements of the present invention;

Fig. 2 is an enlarged radial fragmentary section taken through the drum from approximately the line 2-2 of Fig. 1; -

Fig. 3 is an axial section of the mounting mechanism for the lateral support taken substantially from the line 3-3 of Fig.2;

Fig. 4 is a radial section somwhat further enlarged taken substantially from the line 4-4 of Fig. 2;

Fig. 5 is an axial section taken substantially from the line 5-5 of Fig. 2; and

Fig. 6 is an end or radial elevation of the mounting structure as seen from the line 6-6 of Fig. 2.

DETAILED DESCRIPTION OF THE PREFERRED EMBODIMENTS

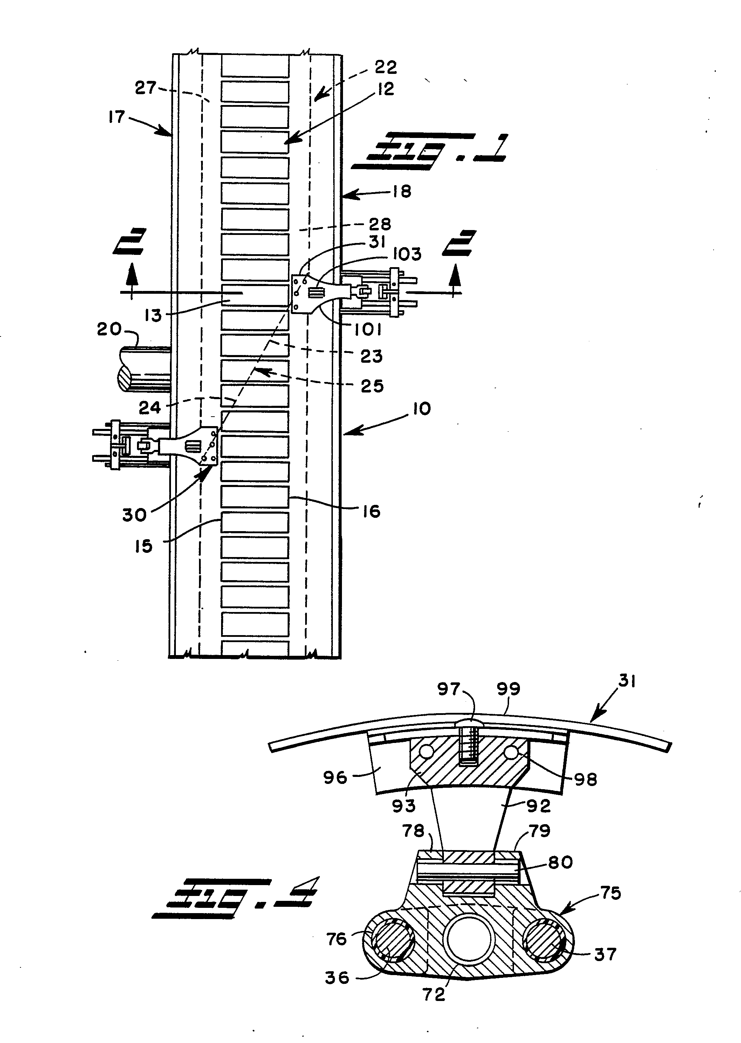

Referring first to Fig. 1 there is illustrated a tire building machine shown generally at 10 which includes an annular drum or deck 12 which is formed of a series of drum segments 13, there being 24 such segments in the illustrated embodiment. The drum deck segments form circumferentially extending parallel deck edges 15 and 16, beneath which are situated annular dual bladder turning assemblies 17 and 18, respectively. The entire drum including the sectors and the dual bladder assemblies is mounted on shaft 20 for rotation. The expansion and contraction of the drum and its rotation may be controlled by an operator or may be controlled automatically.

Fig. 1 also illustrates in phantom lines shown generally at 22 a layer of breaker or belt material with its leading or bias edge indicated at 23 while its trailing edge is indicated at 24 on the same bias angle. The leading and trailing edges are butt joined to form a butt splice indicated generally at 25, the elements 23, 24 and 25 essentially being the same line.

As seen, the belt or breaker material extends beyond the deck edges 15 and 16 and overlies the bladder assemblies 17 and 18 as indicated at 27 and 28. Such overhanging material is the part to be folded at the deck edge. However, it can be appreciated that such overhanging material is not firmly supported and accordingly for such overhanging portion, it is not easy to make a butt or lap splice of the tire material extending completely transversely from one edge to the other, nor can the overhanging edges be properly gripped for feeding or winding purposes.

To facilitate this purpose, the machine is provided with two lateral support plates located generally at 30 and 31 which extend laterally from the deck edges and provide a rigid supporting surface underlying the overhanging stock at the splice 25. As indicated in Fig. 1, the underlying support surfaces 30 and 31 may be circumferentially offset because of the bias angle of the splice. As illustrated in Fig. 1, the underlying support surfaces are six deck segments apart or one-fourth of the total deck circumference, or thus 90° offset.

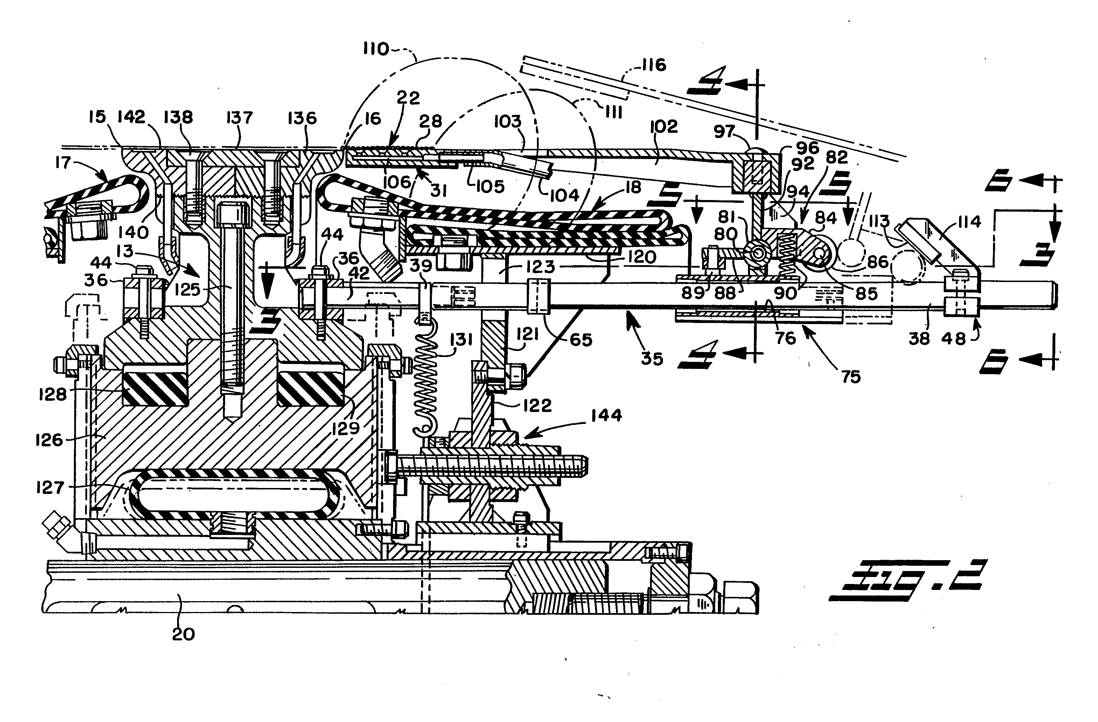

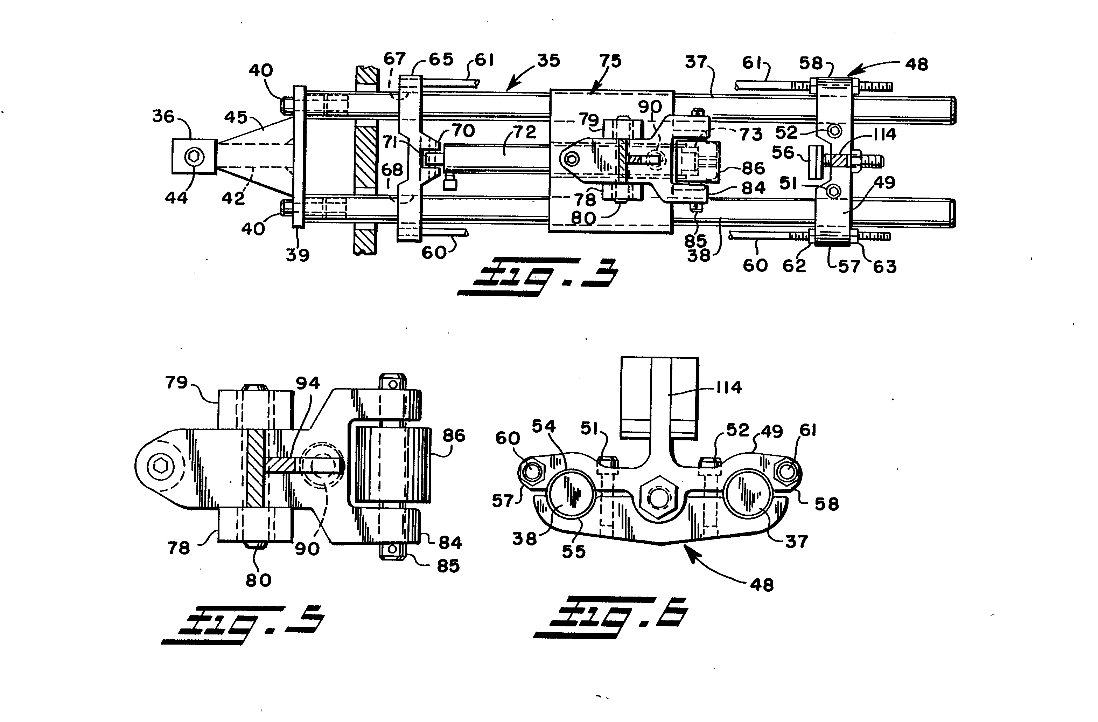

Referring now to Figs. 2 and 3 it will be seen that the outwardly extending support plate 31 is supported generally on a frame 35 extending in cantilever fashion from hub 36 which is welded to the sector 13. The main portion of the frame includes parallel support rods 37 and 38 which are interconnected at their inner ends by transverse plate 39 secured to the rods by fasteners 40. The plate 39 has extending inwardly therefrom a single rod 42 which projects into the hub 36 and is removably secured in such hub by fastener 44. A rigidifying triangular gusset plate 45 is secured to the top of the rod 42 and the vertical plate 39.

At the outer or distal ends of the parallel rods 37 and 38 there is provided a transverse clamp frame 48. The transverse clamp frame includes an upper part 49 and a lower part 50 which are held together by clamp screws 51 and 52. Each part includes a pair of opposed semicircular recesses as indicated at 54 and 55, respectively, embracing the rods 37 and 38. The transverse frame 48 may be clamped to any desired position along such rods simply by releasing the clamp screws 51 and 52 and shifting the transverse frame along such rods.

The upper clamp member 49 includes laterally projecting ears 57 and 58 to which are secured rods 60 and 61. Such rods as indicated in Fig. 3 are threaded and each may be secured to the transverse frame by the nuts seen at 62 and 63.

Such rods extend inwardly and are secured at their opposite ends to transverse frame 65. Such transverse frame 65 includes holes 67 and 68 through which the rods 37 and 38 extend. Such transverse frame is thus adjustably secured to the transverse frame 48 which is in turn adjustably clamped to such parallel rods.

The transverse frame 65 includes in the center thereof a clevis-pin connection shown generally at 70 for the rod 71 of piston-cylinder assembly 72. The blind end of the piston-cylinder assembly is connected at 73 to transverse frame 75, which as seen in Fig. 2 rides upon the parallel rods 37 and 38 by means of linear bushings 76. The transverse frame 75 thus spans the two parallel rods and is freely movable back and forth along the rods by the action of the piston-cylinder assembly 72.

As seen more clearly in Figs. 4 and 5, the slide includes a pair of upstanding ears 78 and 79 through which extends a pivot pin 80. The pin also extends through hub 81 of rocker bracket 82. The bracket includes an outwardly extending clevis portion 84, between the arms of which extends pin 85 on which is mounted roller 86. In the opposite of inner direction the bracket is provided with an arm 88 which includes a downwardly extending adjustable stop projection 89. A compression spring 90 urges the rocker bracket in a counterclockwise direction as viewed in Fig. 2 causing the adjustable stop to engage the top of the slide. In such adjusted position, the edge of the lateral extension support plate 31 is axially aligned with the deck edge 16.

Also extending upwardly from the hub 81 is an arm 92 having a male boss 93 on the upper end thereof. As indicated in Fig. 2, a gusset 94 extends rearwardly of such arm.

The proximal or connection end of the support plate 31 includes a female inverted U-shape connection end 96 which fits on the male boss 93 in a snug manner. A fastener 97 secures the support plate in place on the upwardly extending arm. For larger diameter drums, a female-male extension may be placed on the arm boss 93.

The lateral support plate 31 includes an arcuate top or outer surface 99 which laterally enlarges as it approaches the support area as indicated at 101. The more narrow portion of the support surface is provided with rigidifying flanges 102 and such surface is provided with a cut-out 103 to enable one or more vacuum hoses 104 readily to be attached to inwardly projecting nipple 105 which is in turn connected to the vacuum manifold 106. It will be appreciated that such vacuum may be controlled by an on/off valve either manually or automatically. For ferrous or steel belted materials, it will also be appreciated that either permanent or electromagnets may be employed. The gripping effect of the latter can of course be turned off and on.

In Fig. 2 the lateral support or deck extension is shown in its operative position. However, in such position it would obviously interfere with the operation of the dual bladder assembly 18, such bladders in an intermediate position achieving the phantom outlines 110 and 111. In order to clear the operation of the bladders, the piston-cylinder assembly 72 is extended causing the slide 75 to move to the right as seen in Fig. 2 until the roller 86 contacts angled abutment pad 113 mounted on angled bracket 114 extending from the transverse frame 48. This causes the rocker bracket 82 to pivot clockwise as seen in Fig. 2 against the pressure of spring 90 moving the lateral support 31 to the phantom line position seen at 116. In such position the operation of the bladders is unimpeded.

As can be seen in Fig. 2, the bladder assembly 18 is mounted on shelf 120 supported on plate 121 which is in turn supported on axially adjustable plate 122. In this manner the width of the bladder assemblies can be axially adjusted. To accommodate the frame 35 suitable cut-outs 123 are provided in such plate.

As indicated in such prior patent No. 4,427,473, the deck segments 13 are secured by elongated fasteners 125 to radially movable segments 126, such segments being moved radially by the expansion of annular bladder 127. Contraction of the segments is obtained by the action of relatively large annular elastic bands 128 and 129 which contract the drum when the bladder 127 is vented. It is noted that a counterbalance spring is shown at 131, such spring being under tension and being secured to the plate 39 of the frame. Such counterbalance spring helps to relieve the load caused by the weight of the lateral extension and its frame, especially upon rotation of the drum.

Also, as described more clearly in such prior U.S. Patent No.4,427,473, the deck segment 13 includes a pair of outer deck sections 135 and 136 having interfitting portions relieved at their radial outer sides to accommodate the center clamp 137 which is secured to the deck section 13 by fasteners 138. The outer deck sections are mounted on the deck section 13 by interfitting serrations seen at 140. This permits the deck to be varied in width with each outer deck section being movable by the pitch of such serrations which is approximately 0.13 cm. Also, if desired, the deck sections may be provided with vacuum grippers seen at 142. In this manner not only is the width of the deck axially adjustable, but also the width of the bladder assemblies through the adjustment mechanism for plate 122 seen at 144. Consequently, the operative positions of the lateral supports may also be adjusted by shifting the position of the transverse clamp frame 48 on the support rods 37 and 38. It will be noted that the entire lateral deck assembly moves radially in and out with the deck segment to which it is attached. Each of the deck segments may be provided with a hub 36 for attachment of the mechanism seen in Fig. 2.

The following is a typical sequence of operation. With the lateral deck extensions in the position shown in Fig. 2 and with the drum expanded by inflation of the bladder 127, the drum may be spotted in a selected position. The servicer then feeds belt material at a selected speed synchronized with rotation of the drum and in this manner a number one belt, for example, is then run onto the drum, being gripped by the lateral extensions at the leading edge. For example, the first belt may be slightly lap spliced with the lap splice stitched automatically by a soft stitching roller. A second belt may then be run onto the machine and lapped or butt spliced. The belt materials are then properly positioned on the drum.

At this point the vacuum or magnetic grippers may be released and the piston-cylinder assemblies 72 extended. The lateral supports then move axially outwardly and pivot up to the position seen at 116 in Fig. 2. The bladder assemblies are then inflated to fold the belt material around the edges of the deck, all as shown more clearly in such prior U.S. Patent No. 4,427,473. With the belt edges folded, the piston-cylinder assemblies 72 now retract moving the lateral supports back to their original position which is flush with the axial circumference of the deck. At this point tread stock may be applied to the thus folded belt and stitched. When this is completed a belt assembly carrier or transfer moves to the centerline of the drum and contracts, or perhaps more aptly expands inwardly, gripping the tread and belt assembly from the outside. At this time the drum collapses by venting the bladder 127 and the carrier transfers the completed belt and tread assembly axially of the machine to be assembled, for example, with a tire carcass in a second stage machine. Once the carrier has cleared the machine, the drum may again expand and spot itself for receipt of the number one belt.

With the improvements of the present invention the entire operation above described may be performed completely automatically or with minimum manual assistance.

## Claims

1. A tire building machine comprising an annular rotatable drum (12), and inflatable bladder assemblies (17, 18) at each drum edge (15, 16) operative to fold tire material wound on said drum and overlying the drum edge upon itself at such drum edge when inflated, said machine being characterized by rigid lateral drum extensions (30, 31) operative to overlie said bladder assemblies and underlie the leading edge of such tire material as it is wound on said drum.

2. A tire building machine as set forth in claim 1 wherein said lateral drum extensions move to clear the bladder assemblies when inflated.

3. A tire building machine as set forth in claim 2 wherein each extension is mounted for axial movement.

4. A tire building machine as set forth in claim 3 wherein each extension is mounted for axial and pivotal movement in that order to clear the bladder assemblies when inflated.

5. A tire building machine as set forth in claim 4 wherein said extension is mounted on a rocker - (82) in turn mounted on a slide (75), such pivotal movement being in response to linear movement of said slide.

6. A tire building machine as set forth in claim 5 including a double acting piston-cylinder assembly (72) operative to move said slide.

7. A tire building machine as set forth in claim 1 wherein the operative position of said drum extensions is adjustable axially of the machine.

8. A tire building machine as set forth in claim 1 wherein said drum includes a plurality of radially expandable segments (13), said extension being mounted on a selected segment for radial expansion therewith.

9. A tire building machine as set forth in claim 8 including a large number of such segments, and means (36) for mounting an extension on each segment.

10. A tire building machine as set forth in claim1 including means (142) on said extensions to grip the leading or trailing edges of such material as it is wound on the drum.

11. A tire building machine as set forth in claim 10 wherein said means to grip comprises a vacuum or magnetic system.

12. A tire building machine as set forth in claim 1 wherein said extensions on opposite sides of said drum are circumferentially offset from each other.

13. A method of building tires or tire components on a rigid annular drum having parallel circular deck edges, comprising the steps of winding tire material on said drum with the lateral edges of such material overhanging the deck edges while gripping the undersurface at the leading edge of such material which overhangs the deck edges for at least one complete revolution of the drum.

14. A method as set forth in claim 13 including gripping the undersurface at the trailing edge of such material which overhangs the deck edges after one complete revolution of the drum.

15. A method as set forth in claim 14 wherein such gripping is accomplished by lateral deck extensions on each deck edge.

16. A method as set forth in claim 15 including the step of removing such deck extensions after at least one complete revolution of the drum and then inflating bladder assemblies underlying the deck edge to fold or wrap the material which overhangs the deck edges at the deck edge.

17. A method as set forth in claim 15 wherein such lateral deck extensions form a rigid splice undersurface for the leading and trailing edges of the material overhanging the deck edge.

18. A method as set forth in claim 17 including the step of splicing such leading and trailing edges completely transversely of the material.

19. A method as set forth in claim 18 wherein such material is cut on a bias angle and such lateral deck extensions are circumferentially offset from each other.

*FIG. 1*

*FIG. 4*

Fig. 2

Fig. 3

Fig. 5

Fig. 6

0 206 693